## Europäisches Patentamt

(19) **European Patent Office**

**Office européen des brevets**

(11) Veröffentlichungsnummer: **0 126 848**
**B1**

(12) **EUROPÄISCHE PATENTSCHRIFT**

(45) Veröffentlichungstag der Patentschrift:
09.12.87

(51) Int. Cl.⁴: **C 04 B 28/14,** C 04 B 22/14,
C 04 B 24/10, C 04 B 24/30

(21) Anmeldenummer: **84101669.4**

(22) Anmeldetag: **17.02.84**

(54) Stellmittelgemisch als Zusatz zum Calciumsulfathalbhydrat zur Herstellung von Arbeitsformen.

(30) Priorität: **05.03.83 DE 3307927**

(43) Veröffentlichungstag der Anmeldung:
**05.12.84 Patentblatt 84/49**

(45) Bekanntmachung des Hinweises auf die Patenterteilung:
**09.12.87 Patentblatt 87/50**

(84) Benannte Vertragsstaaten:
**AT BE CH FR GB IT LI NL**

(56) Entgegenhaltungen:
**EP - A - 0 042 992**
**DE - A - 2 433 554**
**DE - A - 3 111 618**
**US - A - 2 966 473**
**US - A - 3 671 280**
**US - A - 3 748 290**

**Die Akte enthält technische Angaben, die nach dem Eingang der Anmeldung eingereicht wurden und die nicht in dieser Patentschrift enthalten sind.**

(73) Patentinhaber: **Börgardts-Sachsenstein GmbH, Kutzhütte, D-3425 Walkenried (DE)**

(72) Erfinder: **Kroker, Veit, Dr. Dipl.-Chem., Wielandstrasse 2, D-3423 Bad Sachsa (DE)**
Erfinder: **Von Ruffer, Christian, Dipl.-Ing., Talstrasse 11, D-3423 Bad Sachsa (DE)**

(74) Vertreter: **Rücker, Wolfgang, Dipl.-Chem., Hubertusstrasse 2, D-3000 Hannover 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, zur Herstellung von Arbeitsformen für die keramische- und sonstige formgebende Industrie ein Gemisch aus Gips, Melaminkunstharz, Beschleunigern, Härtern und Verzögerern herzustellen, wobei die Menge des Halbhydratgipses in seiner Alpha- und/oder Betaform in einem bestimmten Verhältnis zu einer gebräuchlichen wässrigen Lösung eines Melaminharzes mit wenigstens einer $NH_2$-Gruppe steht, die durch Sulfit- oder Sulfonsäuregruppen modifiziert ist und Wasser.

Bekanntlich werden in der keramischen Industrie Gemische auf der Basis von Halbhydratgips zum Modell- oder Formgiessen in grossem Umfang verwendet und zwar aus einem sehr besonderen Grund, weil nämlich die aus Gips hergestellten Modelle und Formen die Eigenschaft haben, Wasser in grossen Mengen aufzunehmen. Diese Massen zur Herstellung der Modelle sind meistens Gemische aus Alpha- und Betahydratgipsen.

Es werden auch Formgipse verwendet, die vorwiegend aus Alphahalbhydrat bestehen, wenn man grosse Härten und Festigkeiten erzielen will, beispielsweise für die Pressformen, die bei der Herstellung von Ziegeln verwendet werden. Calciumsulfathalbhydratgemische, unter Verwendung der Alpha-Modifikation, die man auch als Hartformengips bezeichnet, werden ferner in der Metallgiesserei zur Herstellung von Gussmodellen benutzt.

Die Gipsformen, beispielsweise in der Porzellanindustrie, werden zur Herstellung eines keramischen Produktes durch Drehen und Quetschen auf der Drehscheibe verwendet, insbesondere bei der Herstellung von Massenartikeln, wie Tellern beispielsweise, weil die Gipsform durchlässig ist und das Wasser der keramischen Masse aufsaugen kann. Anschliessend wird das in der Gipsform enthaltene Wasser durch Trocknen wieder ausgetrieben. Diese Aufnahmefähigkeit der Gipsformen für das Wasser der keramischen Masse ist von ganz ausserordentlicher Bedeutung, in Verbindung mit der Möglichkeit, das Wasser der Gipsformen durch Trocknen wieder auszutreiben, so dass man die Form viele Male wieder verwenden kann. Dieses Wechselspiel – Wasseraufnahme, Wasserabgabe – soll möglichst häufig durchgeführt werden können, wobei die Gipsform ihre günstigen Eigenschaften nicht verlieren soll. Eine lange Wiederverwendbarkeit einer Gipsform ist für wirtschaftliche Erzeugnisse von Bedeutung, insbesondere für Erzeugnisse, die massenhaft hergestellt werden, insbesondere Teller, Töpfe, aber auch Dachziegel. Eine andere wichtige Eigenschaft, die von einer Gipsform verlangt wird, ist die, dass sich der keramische Formkörper oder der Formkörper aus Ton beispielsweise bei der Herstellung von Dachziegeln, nach Öffnen der Form vollständig und schnell löst. Bleibt auch nur an einer Stelle der Gipsform ein Teil des Formkörpers haften, ist er nicht mehr brauchbar und muss verworfen werden.

Es ist weiterhin erforderlich, dass die Gipsform eine grosse mechanische Festigkeit besitzt, normalerweise ist die Festigkeit eine Funktion der Dichte des Gipses, was bedeutet, dass Gipse mit hoher Dichte auch gute Festigkeiten besitzen. Andererseits haben Gipse mit hoher Dichte den Nachteil, dass sie nicht in der Lage sind, die erforderlichen Mengen Wasser aufzunehmen, auch die Haftung an der Oberfläche des keramischen Gipses ist zu berücksichtigen.

Es gibt eine Reihe von Eigenschaften, die sich gegenseitig bedingen, aber auch wieder ausschliessen. Es hat daher nicht an Versuchen und Vorschlägen gefehlt, die Masse zur Herstellung von Formen und Modellen in der oben angesprochenen Industrie auf der Basis von Halbhydratgips zu modifizieren, zu ändern und mit fremden Stoffen zu versetzen, wobei die unterschiedlichsten Verbindungen verwendet wurden.

In der eingangs zitierten Mischung unter Verwendung von Melaminkunstharzen (DE-PS 1 805 126) geschieht das durch eine gebräuchliche, wässrige Lösung eines modifizierten Melaminkunstharzes in einer bestimmten Menge Halbhydratgipses. Diese Mischung hat sich als sehr vorteilhaft für eine Reihe von Anwendungen erwiesen, jedoch gibt es andere Anwendungen, bei denen diese Masse nicht frei von Mängeln ist.

Aus der US-PS 29 66 473 sind Gemische aus Calciumsulfathalbhydrat und Harnstoff und Formaldehyd, Melaminkunstharz und Lösungen bekannt, denen Verzögerer, Beschleuniger und Härter zugesetzt sind.

Bei diesen Massen erhält man aber im wesentlichen aus Kunststoff bestehende Gebilde, die zwar glatte Oberflächen besitzen, jedoch praktisch gar kein Wasseraufnahmevermögen haben, weil es diesen Massen an Porosität fehlt. Eine solche Masse ist daher zur Herstellung von Arbeitsformen nicht geeignet. Ähnliche Massen aus Calciumsulfathalbhydrat und Kunstharzen sind ebenfalls in der Literatur beschrieben (Chem. Zenbl. 1964, Heft 34, 2077, 1953 S. 7897). Aber auch bei diesen Massen handelt es sich im wesentlichen um Kunststoffmassen, bei denen der Gips seine wichtigen Eigenschaften nicht mehr entfalten kann. Aus dieser Literaturstelle ist auch zu entnehmen, dass die Porosität und die Wassersorption stark verringert sind.

Es ist ferner bekannt, Halbhydratgemische mit dem modifizierten Melaminharz und auch mit Sacchariden, Polyolen oder Derivaten zu vermischen, um sie als Masse zur Herstellung von Arbeitsformen brauchbar zu machen. Solche Vorschläge sind jedoch meistens nur in Teilbereichen erfolgreich (DE-OS 30 24 152). Der Zusatz von anionischem Melaminkunstharzen zum Gips ist in «Zement Kalk Gips», 1968, Heft 10, Seiten 415 bis 419 beschrieben. und zwar nur kurz, im wesentlichen bezieht sich dieser Artikel auf die Verwendung in Verbindung mit Zement und trotz dieser Veröffentlichung ist das Problem, welches hier ansteht, noch nicht befriedigend gelöst.

Aus der DE-OS 31 11 618 ist ein Verflüssiger für calciumsulfathaltige Bindemittel bekannt, der

sich aus einem an wenigstens einer $NH_2$-Gruppe durch Sulfit- oder Sulfonsäuregruppen modifizierten Melaminharz und Glucose zusammensetzt. Dieser Verflüssiger ist insbesondere gedacht für die Verwendung bei der Herstellung von Gipsformen, um die Sprödigkeit zu verringern.

In der Praxis hat sich jedoch gezeigt, dass dieser Verflüssiger nicht in dem beabsichtigten Anwendungsgebiet voll befriedigt. Sowohl die sich ergebende Härte der Formen als auch ihr Porenvolumen reicht in vielen Fällen nicht aus.

Aufgabe der vorliegenden Erfindung ist es daher, ein Stellmittelgemisch vorzuschlagen, das angewandt in Mischungen mit Calciumsulfathalbhydrat der Alpha- und/oder Beta-Modifikation insbesondere bei Bewahrung der Eigenschaften des Gipses verbesserte mechanische Festigkeit der herzustellenden Formen schafft und ein vergrössertes Porenvolumen.

Gelöst wird diese Aufgabe bei einem Stellmittelgemisch als Zusatz zum Calciumsulfathalbhydrat bei der Herstellung von Arbeitsformen für die keramische und sonstige formgebende Industrie, bestehend aus einem modifizierten Melaminharz, Glucose, Beschleuniger und Verzögerer, durch die folgende Zusammensetzung pro 100 kg Halbhydrat:

0,2–1,0 Gew.-% eines Melaminharzes mit wenigstens einer $NH_2$-Gruppe, die durch Sulfit- oder Sulfonsäuregruppen modifiziert ist, und einer Beschaffenheit, dass eine 10%ige wässrige Lösung davon eine Viscosität zwischen 10 und 400 mPa.s (cP) aufweist,
0,2–0,6 Gew.-% Glucose,
0,005–0,2 Gew.-% Kaliumsulfat und
0,0005–0,002 Gew.-% des Verzögerers «Retardan» ®, einem Kondensationsprodukt von Pyrollidon mit Formaldehyd.

In Verfolg des Erfindungsgedankens ist das Calciumsulfathalbhydrat Alpha- oder Betahalbhydrat.

In vorteilhafter Weiterbildung der Erfindung beträgt die Menge an Kaliumsulfat 0,02 Gew.-% und die Menge an dem Verzögerer «Retardan»®, ein Kondensationsprodukt von Pyrrolidon und Formaldehyd, 0,01 Gew.-%.

Obwohl diese einzelnen Bestandteile der Mischungen für sich alle seit langem bekannt sind, ergibt das Stellmittelgemisch nur in dem Rahmen der genannten Zusammensetzung und nur die ausdrücklich genannten Bestandteile diese vorteilhafte Wirkung. Obwohl es Tausende von chemischen Stoffen gibt, die sowohl verzögern als auch beschleunigen als auch gewisse verflüssigende Wirkungen haben, so hat doch gerade diese Kombination überraschende Ergebnisse erbracht.

Die Herstellung des Gemisches bei seiner Zubereitung erfolgt in an sich üblicher Weise durch Vermischen entsprechender Mengen der genannten Stoffe, die dann bei der Herstellung des Gipsbreies zur Herstellung der Arbeitsformen in dessen Brei, beispielsweise zusammen mit dem Anmachwasser eingearbeitet werden.

Es ist natürlich auch möglich, das Stellmittelgemisch in das trockene pulverförmige Halbhydratgemisch oder in eine spezielle Modifikation einzumischen und die Mischung dann so zu verarbeiten. Diese letztere Art hat den Vorteil, dass für die Herstellung der Arbeitsform nur noch die erforderliche Menge Anmachwasser zugesetzt werden muss. Zusätzlich zu den oben genannten erfindungsgemässen Stellmittelgemischen kann das Gemisch als auch das Calciumsulfathalbhydrat weitere Zusätze enthalten, beispielsweise einen Härter oder einen Anteil eines selbsterhärtenden Kunststoffes.

Es hat sich gezeigt, dass die Menge im Stellmittelgemisch enthaltenden modifizierten Melaminharzes von dessen Viskosität beeinflusst ist, d.h., je höher die Viskosität des modifizierten Melaminharzes im angegebenen Bereich liegt, um so weniger Melaminharz braucht zugegen sein. Mit höherer Viskosität nimmt das Wasserhaltevermögen zu. Im Bereich der höheren Viskosität des Melaminharzes scheint auch eine festigkeitssteigernde Wirkung einzutreten und trotzdem scheint eine ausreichende Porosität der Arbeitsformen vorzuliegen. Die Festigkeit ist also nicht dem Wasseraufnahmevermögen der Gipsform abträglich.

Formen, Formkörper und sonstige Körper, hergestellt aus Calciumsulfathalbhydratgemischen oder verschiedenen Halbhydraten unter Verwendung des erfindungsgemässen Stellmittelgemisches sind zwar in erster Linie für die Herstellung keramischer Arbeitsformen gedacht, sie eignen sich jedoch auch für die Verwendung in der Metallgiesserei, für Dentalgipse, für Hartspachtelmassen, für Verbandsgipse und sonstige Zwecke, beispielsweise für die künstlerische Gestaltung.

## Patentansprüche

1. Stellmittelgemische als Zusatz zum Calciumsulfathalbhydrat bei der Herstellung von Arbeitsformen für die keramische und sonstige formgebende Industrie, bestehend aus einem modifizierten Melaminharz, Glucose, Beschleuniger und Verzögerer, gekennzeichnet durch folgende Zusammensetzung pro 100 kg Halbhydrat:

0,2–1,0 Gew.-% eines Melaminharzes mit wenigstens einer $NH_2$-Gruppe, die durch Sulfit- oder Sulfonsäuregruppen modifiziert ist, und einer Beschaffenheit, dass eine 10%ige wässrige Lösung davon eine Viscosität zwischen 10 und 400 mPa.s(cP) aufweist,
0,2–0,6 Gew.-% Glucose,
0,005–0,2 Gew.-% Kaliumsulfat und
0,0005–0,002 Gew.-% des Verzögerers «Retardan»®, einem Kondensationsprodukt von Pyrollidon mit Formaldehyd.

2. Gemisch nach Anspruch 1, dadurch gekennzeichnet, dass das Calciumsulfathalbhydrat Alpha- und/oder Betahalbhydrat ist.

3. Gemisch nach Anspruch 1, dadurch gekennzeichnet, dass die Menge an Kaliumsulfat 0.02 Gew.-% und die Menge an dem Verzögerer «Re-

tardan», einem Kondensationsprodukt von Pyrolidon und Formaldehyd, 0,01 Gew.-% beträgt.

## Revendications

1. Mélange d'agents de fixation, servant d'additif à du sulfate de calcium semi-hydraté lors de la fabrication de moules de travail pour l'industrie céramique et les autres industries de moulage, constitué d'une résine de mélamine modifiée, de glucose, d'un accélérateur et d'un retardateur, caractérisé par la composition suivante, pour 100 g du semi-hydrate:

0,2–1,0% en poids d'une résine mélamine comportant au moins un groupe $NH_2$, laquelle est modifiée par des groupes sulfite ou acide sulfonique, et telle qu'une solution aqueuse à 10% de cette résine présente une viscosité comprise entre 10 et 400 mPa.s(cP),
0,2–0,6% en poids de glucose,
0,005–0,2% en poids de sulfate de potassium et,
0,0005–0,002% en poids du retardateur «Retardan®», un produit de condensation de la pyrrolidone et du formaldéhyde.

2. Mélange selon la revendication 1, caractérisé en ce que le sulfate de calcium semi-hydraté est l'alpha- et/ou le bêta-semihydrate.

3. Mélange selon la revendication 1, caractérisé en ce que la quantité de sulfate de potassium est de 0,02% en poids, et la quantité du retardateur «Retardan», un produit de condensation de la pyrrolidone et du formaldéhyde, est de 0,01% en poids.

## Claims

1. Suspension agent mixture as an addition to calcium sulphate hemi-hydrate in the production of working molds for the ceramic and other mold-using industries, consisting of a modified melamine resin, glucose, accelerator and inhibitor, characterized by the following composition per 100 kg of hemi-hydrate:

0.2–1.0% wt. of a melamine resin with at least one $NH_2$ group, which is modified by sulfite or sulphonic acid groups, and having the property that a 10% aqueous solution of it has a viscosity between 10 and 400 cP,
0.2–0.6% wt. glucose,
0.005–0.2% wt. potassium sulphate and
0.0005–0.002% wt. of the inhibitor «Retardan»® a condensation product of pyrollidone with formaldehyde.

2. Mixture in accordance with claim 1, characterized by the fact that the calcium sulphate hemi-hydrate is alpha- and/or beta-hydrate.

3. Mixture in accordance with claim 1, characterized by the fact that the quantity of potassium sulphate is 0.02% wt. and the quantity of «Retardan» inhibitor, a condensation product of pyrollidone and formaldehyde, is 0.01% wt.